# EUROPÄISCHE PATENTSCHRIFT

(11) **EP 0 505 524 B1**
(45) Veröffentlichungstag und Bekanntmachung des Hinweises auf die Patenterteilung: **22.02.1995**
(21) Anmeldenummer: 91915921.0
(22) Anmeldetag: 12.09.1991
(51) Int. Cl.: G08G 5/04, B64D 47/06

(54) **VERFAHREN UND EINRICHTUNG ZUR VERMEIDUNG VON VOGELSCHLAG AN FLUGZEUGEN**
PROCESS AND DEVICE FOR PREVENTING BIRD-STRIKES ON AIRCRAFT
PROCEDE ET DISPOSITIF POUR EVITER L'IMPACT D'OISEAUX SUR LES AVIONS

(30) Priorität: 14.09.1990 DE 4029205
(43) Veröffentlichungstag der Anmeldung: 30.09.1992
(73) Patentinhaber: Hella KG Hueck & Co., 59552 Lippstadt (DE)
(72) Erfinder: SCHULTE, Peter, D-5760 Arnsberg 24 (DE); SCHMEES, Siegfried, D-4787 Geseke (DE); LEPPER, Werner, D-4782 Erwitte (DE); NOLTE, Dieter, D-4787 Geseke (DE)
(86) Internationale Anmeldenummer: EP9101732
(87) Internationale Veröffentlichungsnummer: WO9205528

(56) Entgegenhaltungen:
- EP-A- 0 236 267
- US-A- 3 183 480
- US-A- 4 384 269

## Beschreibung

Die Erfindung betrifft ein Verfahren zur Vermeidung von Vogelchlag an Flugzeugen mittels mindestens einer Lichtblitze erzeugenden Lichtquelle am Flugzeug, wobei die Frequenz der erzeugten Lichtblitze während mindestens einer Zykluszeit verändert wird und eine Einrichtung zur Vermeidung von Vogelschlag an Flugzeugen mit mindestens einer Lichtquelle zur Aussendung von Lichtblitzen an Flugzeugen, die von einer Steuereinrichtung ansteuerbar ist, und mit einem Speicher, in dem mindestens eine Zykluszeit für eine Variation der Lichtblitze abgespeichert ist.

Aus der europäischen Patentanmeldung 0 236 267 A2 ist ein Verfahren und eine Einrichtung zur Verhütung von Vogelschlag dieser Art bekannt. Hierbei wird der Vogelschlag an Flugzeugen mittels mindestens einer am Flugzeug angebauten Lichtblitze erzeugenden Lichtquelle verhütet. Die Frequenz der erzeugten Lichtblitze wird dabei während mindestens einer Zykluszeit variiert. Die Frequenz wird dabei bei dem Start des Flugzeugs in einem Bereich zwischen 0,1 Hz und 3 Hz ein oder mehrere Male kontinuierlich gesteigert, um dann auf der Maximalfrequenz festgehalten zu werden. Dabei werden möglichst zwei Lichtquellen verwendet.

Als nachteilig erweist sich hierbei, daß die Zykluszeit fest vorgegeben ist, so daß bei einer Anwendung in unterschiedlichen Flugzeugen jeweils eine Anpassung der Zykluszeit erfolgen muß, was aufwendig ist und zu erhöhten Kosten führt. In diesem Zusammenhang erweist sich als besonderes nachteilig, daß selbst bei einer Anpassung auf den jeweiligen Flugzeugtyp bei der Vorgabe der Zykluszeit nicht berücksichtigt werden kann, ob das Flugzeug voll-, teil- oder unbeladen ist, so daß eine optimale Blitzfrequenzveränderung und somit eine optimale Verhütung von Vogelschlag nicht erreicht werden kann. Auch das Durchlaufen von mehreren Zykluszeiten, in denen die Frequenz gesteigert wird und danach auf einem Maximalwert festgehalten wird, führt hierbei nicht zu einer gewünschten Anpassung an den jeweiligen Flugzeugtyp und führt auch nicht zu einer effektiven Verhütung von Vogelschlag an Flugzeugen, da bei kontinuierlich ablaufenden Blitzfolgen sich ein Gewöhnungseffekt einstellt, so daß die Sicherheit bei dem Betrieb des Flugzeugs in der Start- und Landephase herabgesetzt wird.

Der Erfindung liegt die Aufgabe zugrunde, ein Verfahren und eine Einrichtung zur Verhütung von Vogelschlag zu schaffen, die zum einen einen optimalen Blitzfrequenzbereich für alle Start- und Landephasen bereitstellen und zum anderen unabhängig von der Beladung und zudem flugzeugunspezifisch sind.

Die Aufgabe wird bei dem erfindungsgemäßen Verfahren nach Anspruch 1 dadurch gelöst, daß die Blitzfrequenz in Abhängigkeit von der Geschwindigkeit und/oder der Höhe und/oder der Beschleunigung des Flugzeugs variiert wird.

Es ist von Vorteil, daß die Blitzfrequenz in Abhängigkeit von der Geschwindigkeit und/oder der Höhe und/oder der Beschleunigung des Flugzeugs variiert wird, weil somit auf einfache und kostengünstige Weise, da auf diese Signale in dem Flugzeug leicht zurückgegriffen werden kann, eine Variation der Lichtblitzfrequenz erreicht werden kann, die für alle Start- und Landephasen einen optimalen Bereich der Blitzfrequenz vorgibt, so daß die Wirksamkeit des Verfahrens erheblich erhöht wird und zudem sichergestellt wird, daß in den Bereichen, in denen das Flugzeug auf Vögel treffen kann, diese sicher und zuverlässig aus dem Bereich des Flugzeugs vertrieben werden. Zudem erweist sich als besonders vorteilhaft, daß durch die Verwendung von Flugparametern bei der Bestimmung der Blitzfrequenz erreicht wird, daß das Verfahren ohne Anpassung in jeden Flugzeugtyp einbaubar ist und zudem von der Beladung des Flugzeugs unabhängig ist, da es nicht an feste Zeiten gebunden ist, wodurch zum einen die Kosten für das Gerät, die Montage und die Herstellung verringert werden und zum anderen die Sicherheit bei dem Betrieb des Flugzeugs erhöht wird.

Die gleichen Vorteile ergeben sich bei der Lösung der Aufgabe durch die Merkmale der Einrichtung nach Anspruch 7, bei der der Speicher der Steuereinrichtung ein Kennlinienfeldspeicher ist, in dem Werte für die Blitzfrequenzen in Abhängigkeit von der Geschwindigkeit und/oder der Höhe und/oder der Beschleunigung des Flugzeugs abgespeichert sind und eine Eingangseinrichtung aufweist, die mit einem Bordrechner verbunden ist, der die Daten der Geschwindigkeit und/oder der Höhe und/oder der Beschleunigung des Flugzeugs liefert.

Dadurch, daß die Variation in der Lande- und Startphase einschaltbar ist, ergibt sich der Vorteil, daß in allen Bereichen, in denen Vogelschlag auftreten kann, eine wirkungsvolle Verhütung stattfinden kann.

Es ist von Vorteil, daß Werte für die Blitzfrequenz in Abhängigkeit von der Geschwindigkeit und/oder der Höhe und/oder der Beschleunigung des Flugzeugs abgespeichert sind, weil sich somit ein besonders einfacher Zugriff auf diese Werte bei dem Betrieb des Flugzeugs ergeben und diese Werte mit hoher Sicherheit zur Verfügung stehen.

Dadurch, daß die Werte für die Blitzfrequenz in einem Kennlinienfeld abgespeichert sind, ergibt sich der Vorteil, daß für alle Flugzeugtypen unter allen Flugbedingungen und bei allen Beladungsverhältnissen immer die optimale Blitzfrequenz über einen mit Sicherheit ausreichenden Flugbereich, in dem Vogelschlag auftreten kann, eingeschaltet wird.

Vorteilhaft ist es, daß bei Erreichen einer vorgegebenen Höhe und einer vorgegebenen Geschwindigkeit des Flugzeugs eine Ausschaltung der Lichtblitzerzeugung erfolgt, weil somit eine automatische Abschaltung gewährleistet wird, die zum einen sicherstellt, daß die Lichtblitzerzeugung in einem Flugbereich ausgeschaltet ist, in dem kein Vogelschlag auftreten kann und zum anderen gewährleistet wird, daß die Lebensdauer der Lichtblitzerzeugungseinrichtung, die nach dem Verfahren betrieben wird, eine besonders hohe Lebensdauer aufweist.

Es ist vorteilhaft, daß die Lichtblitzerzeugung in jeder Flugphase manuell oder automatisch einschaltbar ist, weil auf diese Art.und Weise einfach und kostengünstig das Verfahren zur Vermeidung von Vogelschlag an Flugzeugen auch zur Vermeidung von Flugzeugkollisionen eingesetzt werden kann, wodurch die Sicherheit bei dem Betrieb des Flugzeugs durch eine Erhöhung der Warnwirksamkeit erheblich erhöht wird.

Hierbei ist besonders vorteilhaft, daß die Lichtblitzerzeugung automatisch einschaltbar ist, so daß bei dem Erkennen einer Kollisionsgefahr, z. B. durch eine automatische Radaranlage an dem Flugzeug, die Lichtblitzerzeugung die Sicherheit bei dem Betrieb des Flugzeugs durch Erhöhung der Warnwirksamkeit erhöht.

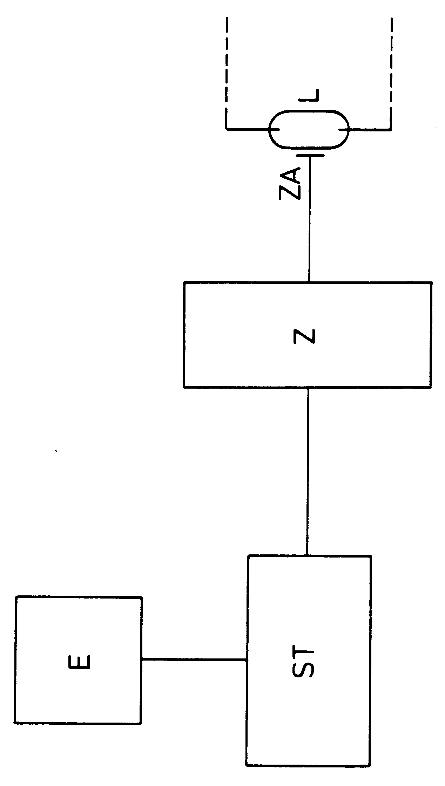

Ein Ausführungsbeispiel ist in der Zeichnung dargestellt und wird im folgenden anhand der Zeichnung näher beschrieben.

Die einzige Figur zeigt ein vereinfachtes Blockschaltbild einer Einrichtung zur Vermeidung von Vogelschlag an Flugzeugen.

Eine Steuereinrichtung (ST), in der die variierende Blitzfrequenz erzeugt wird, ist elektrisch leitend mit einer Zündeinrichtung (Z) verbunden. Die Zündeinrichtung (Z) ist elektrisch leitend mit einer Zündanode (ZA) einer Lichtquelle (L) verbunden, die hier beispielhaft als eine Entladungslampe aufgebaut ist. Die Versorgungseinrichtung der Lichtquelle (L) ist hier nicht gezeigt.

Zur Erzeugung von variierenden Blitzfrequenzen, die in Abhängigkeit von Flugparametern stehen, weist die Steuereinrichtung (ST) einen Speicher auf, der hier beispielhaft als ein Kennlinienfeldspeicher aufgebaut ist, in dem Werte für die Blitzfrequenzen in Abhängigkeit von der Geschwindigkeit und/oder der Höhe und/oder der Beschleunigung des Flugzeugs abgespeichert sind. Die Steuereinrichtung (ST) ist mit einer Eingangseinrichtung (E) verbunden, die elektrisch leitend, z. B. mit einem Bordrechner des Flugzeugs verbunden ist und von diesem Daten erhält und an die Steuereinrichtung (ST) weiterleitet, die der Geschwindigkeit und/oder der Höhe und/oder der Beschleunigung des Flugzeugs entsprechen. Aufgrund dieser einlaufenden Daten erzeugt die Steuereinrichtung (ST), z. B. während der Startphase variierende Lichtblitzfrequenzen, wobei die Frequenz z. B. mit zunehmender Geschwindigkeit und Höhe des Flugzeugs, angepaßt an die Geschwindigkeit und die Höhe des Flugzeugs, von einem Anfangswert auf einen Maximalwert gesteigert wird.

Je nach der Ausführungsform kann die zu variierende Blitzfrequenz nur von einem Parameter, das heißt, entweder von der Geschwindigkeit oder der Höhe oder der Beschleunigung abhängen. Bei anderen Ausführungsformen hat es sich als vorteilhaft erwiesen, daß die variierende Blitzfrequenz z. B. von einem Kennlinienfeld abhängt, das durch die Geschwindigkeit und die Höhe des Flugzeugs vorgegeben ist. Weitere gute Ergebnisse werden erzielt, wenn die Variation der Blitzfrequenz von einem Kennlinienfeld abhängt, das durch die Höhe und die Beschleunigung vorgegeben ist. Je nach den Anforderungen sind dabei alle Kombinationen der genannten Flugparameter zur Bestimmung der Blitzfrequenz möglich.

Erfolgt bei dem Start eine Flugzeugs eine Erhöhung der Blitzfrequenz in Abhängigkeit von den Flugparametern, so wird bei der Landung des Flugzeugs die Blitzfrequenz von der maximalen Frequenz bis auf eine minimale Frequenz abgesenkt, wodurch auch bei dem Landeanflug eine erhöhte Warnwirksamkeit in Bezug auf das typische Verhalten von Vögeln erreicht wird. Um eine erhöhte Lebensdauer der Einrichtung zu erhalten und gleichzeitig sicherzustellen, daß die Lichtblitzerzeugung nur dann erfolgt, wenn sich das Flugzeug in einem Bereich befindet, in dem Vogelschlag auftreten kann, wird die Erzeugung der Lichtblitze bei dem Erreichen einer vorgegebenen Höhe und/oder einer vorgegebenen Geschwindigkeit abgeschaltet.

Das Verfahren und die Einrichtung sind somit, ohne daß Veränderungen vorgenommen werden müssen, in allen Flugzeugtypen einschließlich Hubschraubern und Senkrechtstartern einsetzbar. Die Lichtblitzerzeugung kann dabei auch manuell oder automatisch in jeder Flugphase einschaltbar sein, so daß das Verfahren oder die Einrichtung z. B. auch zur Vermeidung von Flugzeugkollisionen verwendet werden kann, da sich durch die Art der Blitzerzeugung eine erhöhte Warnwirksamkeit und damit eine Steigerung der Sicherheit ergibt.

Bei dem in der einzigen Figur gezeigten Ausführungsbeispiel ist die Einrichtung auf eine Steuereinrichtung (ST), eine Zündeinrichtung (Z) und eine Lichtquelle (L) beschränkt. Bei anderen Ausführungsbeispielen können auch mehrere Lichtquellen (L) verwendet werden, die von einer gemeinsamen Steuereinrichtung (ST) oder von unterschiedlichen Steuereinrichtungen (ST) und Zündeinrichtungen (Z) angesteuert werden können. Zudem können bei Verwendung mehrerer Lichtquellen (L) eine oder mehrere Versorgungseinrichtungen zur Verwendung kommen.

## Patentansprüche

1. Verfahren zur Vermeidung von Vogelschlag an Flugzeugen mittels mindestens einer Lichtblitze erzeugenden Lichtquelle am Flugzeug, wobei die Frequenz der erzeugten Lichtblitze während mindestens einer Zykluszeit verändert wird, dadurch gekennzeichnet, daß die Blitzfrequenz in Abhängigkeit von der Geschwindigkeit und/oder der Höhe und/oder der Beschleunigung des Flugzeugs variiert wird.

2. Verfahren nach Anspruch 1, dadurch gekennzeichnet, daß die Variation in der Lande- und Startphase einschaltbar ist.

3. Verfahren nach Anspruch 2, dadurch gekennzeichnet, daß Werte für die Blitzfrequenz in Abhängigkeit von der Geschwindigkeit und/oder der Höhe und/oder der Beschleunigung des Flugzeugs abgespeichert sind.

4. Verfahren nach Anspruch 3, dadurch gekennzeichnet, daß die Werte für die Blitzfrequenz in einem Kennlinienfeld abgespeichert sind.

5. Verfahren nach Anspruch 4, dadurch gekennzeichnet, daß bei Erreichen einer vorgegebenen Höhe und einer vorgegebenen Geschwindigkeit des Flugzeugs eine Ausschaltung der Lichtblitzerzeugung erfolgt.

6. Verfahren nach Anspruch 5, dadurch gekennzeichnet, daß die Lichtblitzerzeugung in jeder Flugphase manuell oder automatisch einschaltbar ist.

7. Einrichtung zur Vermeidung von Vogelschlag an Flugzeugen mit mindestens einer Lichtquelle zur Aussendung von Lichtblitzen am Flugzeug, die von einer Steuereinrichtung ansteuerbar ist und mit einem Speicher, in dem mindestens eine Zykluszeit für eine Variation der Blitzfrequenz abgespeichert ist, dadurch gekennzeichnet, daß der Speicher der Steuereinrichtung (ST) ein Kennlinienfeldspeicher ist, in dem Werte für die Blitzfrequenz in Abhängigkeit von der Geschwindigkeit und/oder der Höhe und/oder der Beschleunigung des Flugzeugs abgespeichert sind und daß eine Eingangseinrichtung (E) mit einem Bordrechner verbunden ist, der die Daten der Geschwindigkeit und/oder der Höhe und/oder der Beschleunigung des Flugzeugs liefert.

## Claims

1. A method of preventing bird strikes on aircraft by means of at least one light flashes generating light source on an aircraft, in which respect the frequency of generated light flashes is changed during at least one cycle period, **characterized in that** the flash frequency is varied in dependence on the speed and/or altitude and/or acceleration of the aircraft.

2. A method according to claim 1, **characterized in that** the variation can be switched on during the landing and take-off phase.

3. A method according to claim 2, **characterized in that** values for the flash frequency are stored in dependence on the speed and/or altitude and/ or acceleration of the aircraft.

4. A method according to claim 3, **characterized in** **that** the values for the flash frequency are stored in a family of characteristics.

5. A method according to claim 4, **characterized in that** the light-flash generation is switched off on arrival at a specified altitude and a specified speed of the aircraft.

6. A method according to claim 5, **characterized in** **that** the generation of light flashes can be manually or automatically switched on in any flight phase.

7. Device for the prevention of bird strikes on aircraft, comprising at least one light source for emitting light flashes on an aircraft which is controlled by a control device and a memory in which at least one cycle period for a variation of the flash frequency is stored, **characterized in that** the memory of the control device (ST) is a family of characteristics memory in which are stored values for the flash frequency in dependence on speed and/or altitude and/or acceleration of the aircraft, and that the input device (E) is connected to an onboard computer which delivers data of speed and/or altitude and/or acceleration of the aircraft.

## Revendications

1. Procédé pour l'évitement d'impact d'oiseaux à des avions, au moyen d'au moins une source de lumière engendrant des éclairs de lumière à l'avion, la fréquence des éclairs de lumière engendrés, durant au moins un temps de cycle, étant changée, caractérisé en ce que la fréquence d'éclair est variée en fonction de la vitesse et/ou de l'altitude et/ou de l'accélération de l'avion.

2. Procédé selon la revendication 1, caractérisé en ce que la variation est susceptible d'être mise en service dans la phase d'atterrissage et la phase de décollage.

3. Procédé selon la revendication 2, caractérisé en ce que des valeurs pour la fréquence d'éclair sont mises en mémoire en fonction de la vitesse et/ou de l'altitude et/ou de l'accélération de l'avion.

4. Procédé selon la revendication 3, caractérisé en ce que les valeurs pour la fréquence d'éclair sont mises en mémoire dans un réseau de caractéristiques.

5. Procédé selon la revendication 4, caractérisé en ce que, lors d'atteinte d'une altitude préallouée et d'une vitesse préallouée de l'avion, une mise hors service de l'engendrement d'éclair de lumière a lieu.

6. Procédé selon la revendication 5, caractérisé en ce que l'engendrement d'éclair de lumière est susceptible d'être mis en service dans chaque phase de vol, manuellement ou automatiquement.

7. Agencement pour l'évitement d'impact d'oiseau à des avions, comportant au moins une source de lumière pour l'émission d'éclairs de lumière à l'avion, qui est susceptible d'être commandée par un agencement de commande, et comportant une mémoire, dans laquelle au moins un temps de cycle pour une variation de la fréquence d'éclair est mis en mémoire, caractérisé en ce que la mémoire de l'agencement de commande (ST) est une mémoire de réseau de caractéristiques, dans laquelle des valeurs pour la fréquence d'éclair sont mises en mémoire en fonction de la vitesse et/ou de l'altitude et/ou de l'accélération de l'avion, et en ce qu'un agencement d'entrée (E) est relié avec un calculateur de bord, qui livre les données de la vitesse et/ou de l'altitude et/ou de l'accélération de l'avion.
